# EUROPÄISCHE PATENTSCHRIFT

(11) **EP 0 519 326 B1**
(45) Veröffentlichungstag und Bekanntmachung des Hinweises auf die Patenterteilung: **06.09.1995**
(21) Anmeldenummer: 92109833.1
(22) Anmeldetag: 11.06.1992
(51) Int. Cl.: C04B 35/00, C08L 31/04, C08L 91/06, B22F 1/00

(54) **Formmasse zur Herstellung anorganischer Sintererzeugnisse**
Moldable mass for the production of sintered inorganic articles
Masse moulable pour la production de corps frittés inorganiques

(30) Priorität: 18.06.1991 DE 4119997
(43) Veröffentlichungstag der Anmeldung: 23.12.1992
(73) Patentinhaber: HOECHST AKTIENGESELLSCHAFT, 65926 Frankfurt am Main (DE)
(72) Erfinder: Bayer, Michael, W-8901 Lützelburg (DE); Nagl, Iris, W-8859 Burgheim (DE)

(56) Entgegenhaltungen:
- DD-A- 274 932
- DE-A- 3 630 690
- DE-A- 3 942 745
- PATENT ABSTRACTS OF JAPAN vol. 015, no. 202 23. Mai 1991 & JP-A-30 54 158 (KOEI CHEM. CO., LTD)
- PATENT ABSTRACTS OF JAPAN vol. 013, no. 379 22. August 1989 & JP-A-11 31 052 (TOKIN CORP.)

## Beschreibung

Die Erfindung bezieht sich auf eine keramische oder pulvermetallurgische Formmasse, die durch Spritzgießen geformt wird und die unter Verwendung eines chemisch reagierenden Plastifizierers hergestellt worden ist.

Ausgangsstoff für spritzgegossene Keramik- oder Pulvermetallerzeugnisse ist meist ein feinkörniges Pulver, das mit einem organischen Plastifizierer umhüllt wird und dann durch Spritzguß geformt wird. Vor der Sinterung der Pulver wird der organische Plastifizierer in einem Prozeß, der sich Entbinderung (Debinding) oder Entwachsung (Dewaxing) nennt, entfernt.

Mit Hilfe von polyolefinischen Kunststoffen wie Polypropylenen oder Polyethylenen in Kombination mit Paraffinen lassen sich Spritzgußmassen auf Basis pulvermetallurgischer oder keramischer Pulver herstellen, die die rheologischen Erfordernisse der Spritzgußtechnik erfüllen.
Der Spritzgußvorgang läßt sich ebenso wie die Entformung mit diesen Zusammensetzungen problemlos durchführen.
Die Verwendung von Polyethylenwachsen in Kombination mit Esterwachsen auf Basis Rohmontanwachs oder EVA-Polymeren läßt, vor allem bei keramischen Pulvern, die metallabriebarme Aufbereitung und Formgebung der Massen zu. Somit kann die damit hergestellte Spritzgußmasse auf allen üblichen Spritzgußautomaten, die gehärtete Verschleißflächen haben, verarbeitet werden. Die Verwendung von Polyethylenwachsen in Kombination mit Esterwachsen auf Basis Rohmontanwachs in Pulverspritzgußmassen erlaubt Formgebungstemperaturen unterhalb von 150 °C. Die Verarbeitung der so hergestellten Formmassen im Niederdruckspritzguß ist möglich.

Es hat sich jedoch gezeigt, daß die Formstabilität der Bauteile, die aus den beschriebenen Spritzgußmassen hergestellt wurden, bei Temperaturen oberhalb 200 °C nicht ausreicht, um eine verzugsfreie Entwachsung, d.h. Entfernung des Plastifizierers, der Bauteile zu gewährleisten. Vielmehr neigen die Formlinge zum Fließen unter Temperatureinwirkung, was die Maßhaltigkeit der Bauteile beeinträchtigt.

Weiter hat sich gezeigt, daß die Entwachsung der Formteile aufgrund der ungünstigen Zersetzungseigenschaften der oben beschriebenen Thermoplaste eine Prozeßdauer von mehreren Tagen erfordert, um rißfreie Bauteile zu erhalten. Dadurch wird die Pulverspritztechnik vor allem in der Pulvermetallurgie zu einem unwirtschaftlichen Verfahren.
Die Zersetzung der organischen Hilfsstoffe ist somit von den Einflußgrößen Temperatur und Zeit bestimmt.

Es ist bekannt, den Entwachsungsschritt über einen breiten Temperaturbereich in Abhängigkeit von der Zusammensetzung des Abgases zu steuern(vgl. DE 3611271). Hier wird die Verbrennung oder Verdampfung des Plastifizierers durch Spreizung der Molgewichtsverteilung durch Auswahl von hochmolekularen und niedermolekularen Komponenten auf einen breiten Temperaturbereich verteilt. Eine ähnliche Vorgehensweise ist in DE 3630690 beschrieben, wobei Öle, Paraffine, Wachse, Polypropylen, Polyethylen und Ethylen-Vinylacetat-Copolymere als Plastifiziererkomponenten vorgeschlagen werden. Auch hier ist die Zusammensetzung des Plastifizierers mit dem Ziel einer breiten Molmassenverteilung gewählt worden.

Nach den beschriebenen Verfahren ist es möglich, Formteile durch Spritzgießen herzustellen, wobei die Verbrennung oder Verdampfung der Einzelkomponenten in jedem Abschnitt des Formteils in Abhängigkeit von der Temperatur in gleicher Weise stattfindet. Das führt zur Ausbildung von Dampfphasen an der Oberfläche, aber auch innerhalb des Körpers, wobei der Formkörper aufgebläht wird.

Es wurde gefunden, daß die Entwachsung des spritzgegossenen Formteils stets von außen nach innen erfolgen muß, um die Abführung der entstehenden gasförmigen Zersetzungsprodukte durch die dabei entstandenen Kanalporen in die Umgebung sicherzustellen. Vorausetzung dafür ist eine organische Substanz, die gut verdampfbar ist oder gut mit der Gasatmosphäre,vorzugsweise mit Sauerstoff angereicherter Luft, zur Reaktion gebracht werden kann.
Es wurde weiterhin gefunden, daß das Formteil während des Entwachsungsschrittes zur Sicherung der Formstabilität mechanisch, beispielsweise durch Vernetzung des organischen Hilfsstoffes, verstärkt werden muß.
Es wurde schließlich gefunden, daß die Entwachsung der Formteile durch radikalischen Abbau des organischen Bindemittels oberhalb der Formgebungstemperatur beschleunigt wird.

Die Erfindung betrifft somit eine Formmasse auf Basis von anorganischen Sinterwerkstoffen bestehend aus
70 bis 96 Gew.-Teilen eines Keramik- oder Metallpulvers,
1 bis 10 Gew.-Teilen eines halbsynthetischen Wachses auf Basis Rohmontanwachs,
2 bis 10 Gew.-Teilen eines Polyolefinwachses,
0,98 bis 9,9 Gew.-Teilen eines Ethylen-Vinylacetat-Copolymers,
0 bis 0,05 Gew.-Teilen eines Azo-Esters und
0 bis 0,05 Gew.-Teilen eines organischen Peroxides.

Die erfindungsgemäße Formmasse enthält als Basis nichtmetallisch-anorganische und metallische Pulver.
Dazu gehören Pulver auf Basis von Al₂O₃, AlN, Al₂TiO₅, B₄C, WC, SiC sowie Silikaten und Pulvern, die Ton, Kaolin, Feldspat oder Quarz enthalten.
Die erfindungsgemäßen Pulver auf Metallbasis sind bis zu Temperaturen von 400 °C nicht oxidierbar. Dazu gehören Edelstahl-, Werkzeugstahl- oder Edelmetallpulver. Die maximale Korngröße der erfindungsgemäßen nichtmetallisch-anorganischen und metallischen Pulver liegt bei 150 µm.

Weiterhin enthält die Formmasse Wachse, nämlich halbsynthetische Wachse auf Basis Rohmontanwachs und Polyolefinwachse.

Das halbsynthetische Wachs auf Basis Rohmontanwachs hat folgende Kenndaten:

| | |
|---|---|
| Tropfpunkt | 79 bis 90 °C |
| Säurezahl | 5 bis 35 mg KOH/g |
| Verseifungszahl | 70 bis 160 mg KOH/g |
| Dichte | 0,97 bis 1,03 g/cm³ |
| Viskosität | 20 bis 80 mPa.s bei 100°C |

Das Wachs auf Basis von Polyolefinwachs hat folgende Kenndaten:

| | |
|---|---|
| Tropfpunkt | 102 bis 158 °C |
| Säurezahl | 0 bis 64 mg KOH/g |
| Verseifungszahl | 0 bis 115 mg KOH/g |
| Dichte | 0,87 bis 1,03 g/cm³ |
| Viskosität | 100 bis 1500 mPa.s bei 170 °C |

Das halbsynthetische Wachs auf Basis Rohmontanwachs entsteht durch oxidative Bleichung von Rohmontanwachs und Verestern des so erhaltenen Säurewachses mit einem C₂- bis C₈-Diol. Wachse dieses Typs sind seit vielen Jahren im Handel erhältlich.

Das Wachs auf Basis von Polyolefinwachs entsteht durch Massepolymerisation im Niederdruckverfahren nach Ziegler.
Diese Polyolefinwachse können durch Behandeln der Schmelze mit Luft zu Wachsoxidaten umgesetzt werden.

Auch diese Wachse sind seit vielen Jahren im Handel erhältlich.

Außerdem enthält die erfindungsgemäße Formmasse ein Ethylen-Vinylacetat-Copolymer.Es besitzt einen Schmelzindex nach ASTM D 1238 von 0,2 - 440 dg/min vorzugsweise 0,2 - 168 dg/min, einen Vinylacetatanteil von 11 - 42 %, vorzugsweise 11 - 28 % und eine Vicat-Erweichungstemperatur nach ASTM D 790 von 36 - 80 °C, vorzugsweise 74 - 79 °C.
Ethylen-Vinylacetat-Copolymere sind im Handel erhältlich und werden zur Erhöhung von Zähigkeit, Flexibilität und Elastizität in Kunststoffen, Wachsen und Schmelzklebern verwendet.

Die erfindungsgemäße Formmasse enthält ferner, sofern sie chemisch vernetzt wird, ein organisches Peroxid, das eine Scorch-Temperatur von mindestens 100 °C, vorzugsweise eine Scorch-Temperatur von 160 °C hat. Geeignete Peroxide sind 1,1-Di(t-butylperoxi)-trimethyl-cyclohexan, n-Butyl-4,4-di(t-butylperoxi)-valerat, Dicumylperoxid, t-Butyl-cumyl-peroxid, 1,3-Di(t-butylperoxi-isopropyl)benzol, 3,3,6,6,9,9-Hexamethyl-1,2,4,5-tetraoxacyclononan und 2,5-Dimethyl-2,5-di(t-butylperoxi)-hexan, vorzugsweise 2,5-Dimethyl-2,5-di(t-butylperoxi)-hexan. Organische Peroxide sind im Handel erthältlich und werden unter anderem zur Vernetzung von Thermoplasten und Elastomeren oder zum thermischen Abbau von Polybutylen oder Polyvinylchlorid verwendet.

Ferner enthält die erfindungsgemäße Formmasse bei chemischer Vernetzung einen Radikalbildner in Form eines Azo-Esters, beispielsweise 2,2'-Azo-bis(2-acetoxybutan), 2,2'-Azo-bis(2-acetoxy-propan), 2,2'-Azo-bis(2-acetoxy-3-methyl-butan), 3,3'-Azo-bis(2-acetoxy-2,4-dimethylpentan), 2,2'-Azo-bis(2-acetoxy-4-methyl-pentan), 1,1'-Azo-bis(1-acetoxy-cyclohexan), 1,1'-Azo-bis(1-acetoxy-1-phenylethan), 2,2'-Azo-bis(2-formyloxy-butan), 1,1'-Azo-bis(1-propionoxy-cyclohexan), 2,2'-Azo-bis(2-benzoyloxy-propan), 2,2'-Azo-bis(2-pivaloyloxy-propan), 2-(2'-Acetoxy-propyl-(2')-azo)-2-acetoxy-butan, 1-Formyloxy-1'-acetoxy-2,2'-azo-bis-cyclohexan, (2-Acetoxy-4-methyl-pentyl-(2))-(1'-acetoxy-cyclohexyl-(1'))-diazen. Vorzugsweise wird 2,2'Azo-bis(2-acetoxy-propan) eingesetzt.

Wenn die Formmasse durch Bestrahlung vernetzt wird, sind Peroxid und Azoester nicht unbedingt notwendige Bestandteile, können jedoch die Vernetzung des Binders beschleunigen.

Die Formmasse hat folgende Zusammensetzung:

| | |
|---|---|
| Keramik-od. Metallpulver | 70 bis 96, vorzugsweise 85 bis 94 Gew.-Teile, |
| halbsynth. Wachs | 1 bis 10, vorzugsweise 1,5 bis 6 Gew.-Teile, |
| Polyolefinwachs | 2 bis 10, vorzugsweise 3 bis 6 Gew.-Teile, |
| EVA-Copolymer | 0,98 bis 9,9, vorzugsweise 1,5 bis 3 Gew.-Teile, |
| org. Peroxid | 0 bis 0,05, vorzugsweise 0,02 bis 0,04 Gew.-Teile, |
| Azo-Ester | 0 bis 0,05, vorzugsweise 0,02 bis 0,04 Gew.-Teile. |

Die Herstellung und Verarbeitung der erfindungsgemäßen Formmasse findet in der folgenden Weise statt:

### 1. Organischer Binder

Zur Herstellung der erfindungsgemäßen Binderkomponente werden das halbsynthetische Wachs auf Basis Rohmontanwachs und das polyolefinische Wachs bei einer Temperatur von 130 bis 160 °C in einem geeigneten Rührgefäß aufgeschmolzen und zu einer homogenen Schmelze verarbeitet. Unter Rühren erfolgt nun die Zugabe des Ethylen-Vinylacetat-Copolymers in die Schmelze. Die Mischung wird bei 130 bis 160 °C bis zur vollständigen Auflösung aller Komponenten in der Schmelze gerührt. Abschließend erfolgt die vorsichtige Zugabe des organischen Peroxids und des Azo-Esters unter Rühren.

### 2. Herstellung der Spritzgußmasse:

Der organische Binder aus 1. wird in einem heizbaren Kneter aufgeschmolzen. In die im Kneter befindliche Schmelze wird das metallische oder keramische Pulver bei einer Temperatur von 130 bis 170 °C eingeknetet.

Die thermoplastische Knetmasse wird zu einem rieselfähigen Granulat, vorzugsweise durch Extrusion, zerkleinert und auf einer Spritzgußmaschine zu einem Formteil verarbeitet.
Das ausgeformte Formteil zeichnet sich im erkalteten Zustand durch gute Festigkeit aus, die eine zerstörungsfreie Entgratbarkeit und mechanische Bearbeitbarkeit gewährleistet.

### 3. Steigerung der Formstabilität:

### 3.1. Durch chemische Vernetzung

Das Formteil wird in einem Ofen zunächst mit einer maximalen Heizrate von 20 K/min. auf 170 bis 200 °C, vorzugsweise 180 bis 190 °C erwärmt und über 0,1 - 2 h bei dieser Temperatur gehalten.
Dabei wird die Viskosität des organischen Binders durch radikalische Vernetzung der EVA-Komponente infolge der Aufspaltung des organischen Peroxides so erhöht, daß eine Verformung des Formlings infolge einer Viskositätserniedrigung, verursacht durch weitere Temperaturerhöhung, ausgeschlossen ist.
Durch diese Maßnahme bleibt die Form des Formteils über die gesamte Dauer des folgenden Entwachsungs- und Sinterprozesses erhalten.

### 3.2. Durch Bestrahlung

Das Formteil wird bei Raumtemperatur maximal 1 h mit β-Strahlung oder γ-Strahlung mit einer Wellenlänge kleiner 300 nm bestrahlt. Dadurch wird der organische Binder radikalisch vernetzt, wodurch der Formling bei weiterer Temperaturerhöhung sich nicht mehr verformen kann.

### 4. Entwachsung:

Die Entwachsung der Binderkomponenten der erfindungsgemäßen Formmasse erfolgt im Temperaturbereich von 200 bis 400 °C in mit Sauerstoff angereicherter Atmosphäre.

Bei einer Temperatur oberhalb 220 °C werden die Wachskomponenten, inbesondere die, die Polypropylen enthalten, infolge Aufspaltung des organischen Peroxides radikalisch abgebaut.
Unter Sauerstoffabschluß, der trotz Sauerstoff-haltiger Gasatmosphäre außerhalb des Formteils innerhalb des Formteils auftritt, werden die Bestandteile des Binders, der Polyethylen enthält (also auch das EVA-Copolymer), nach Aufspaltung des Azo-Esters, in einem Temperaturbereich zwischen 300 und 350 °C radikalisch abgebaut.
Die Abbauprodukte sind durch die sauerstoff-angereicherte Ofenatmosphäre vom Außenbereich des Formteils hin zum Inneren des Formteils leicht oxidierbar.
Die Entwachsung erfolgt bei einem Ofenkammerdruck von max. 1,1 bar (abs). Somit wird das Sauerstoff-angereicherte Gas in die durch Oxidation entstandenen Poren im Formteil gedrückt.
Nach Abschluß der Entwachsung erfolgt, je nach Pulverrohstoff, die Umstellung der Ofenatmosphäre auf Schutzgas.
Erst nach Durchführung dieses Schrittes kann das entwachste Formteil auf Sintertemperatur gebracht werden.
Nach diesem Verfahren wird ein spritzgegossenes Formteil mit einer Wandstärke von 6 bis 8 mm innerhalb von 24 h verzugsfrei entwachst und gesintert.

Die nachstehenden Beispiele sollen die Erfindung erläutern.

### Beispiel 1

1,2 Gew.-Teile Esterwachs auf Rohmontanwachsbasis (TP:79-85 °C, SZ: 15-20, VZ: 130-160, Dichte: 1,01-1,03g/cm³, Viskosität:ca.30 mPa.s/100 °C) wurden mit 2,4 Gew.-Teilen Polyolefinwachs (TP: 158 °C, SZ: 0, VZ: 0, Dichte: 0,87-0,89 g/cm³, Viskosität: 1500 mPa.s/170 °C) und 2,4 Gew.-Teilen eines Ethylen-Vinylacetat-Copolymers (Schmelzindex: 0,2-0,4 dg/min., VA-Anteil: 11-13 %, Vicat-E.Temp.: 79 °C) bei 150 °C in einem Rührgefäß geschmolzen und zu einer homogenen Schmelze verarbeitet.

In diese Schmelze wurden je 0,03 Gew.-Teile 2,2-Azo-bis(2-acetoxy-propan) und eines organischen Peroxids (Scorch-Temperatur: ca. 160 °C) eingerührt.
In die Polymerschmelze wurden nun bei 150 °C 94 Gew.-Teile eines Edelstahlpulvers mit einer Korngröße unter 100 µm eingeknetet.
Die thermoplastische Formmasse wurde nun durch Spritzguß zu Prüfstäben mit einem Durchmesser von 8 mm und einer Länge von 50-60 mm verarbeitet. Vor der Entwachsung wurden die Prüfkörper durch Bestrahlung mit γ-Strahlung während 1 h formstabil gemacht.
Anschließend wurden die Prüfkörper in einem Ofen stufenweise bei 230 °C, 280 °C, 330 °C, 380 °C in mit Sauerstoff angereicherter Ofenatmosphäre (Konzentration: 50 Vol.-% Luft, 50 Vol.-Sauerstoff, Ofenkammerdruck: 1,1 bar abs) entwachst. Die Haltezeiten bei den angegebenen Temperaturen betrugen je 4 h. Die Aufheizraten zwischen den Temperaturplateaus betrugen 2 K/min.
Nach Beendigung der Entwachsung wurde die Ofenatmosphäre mit Hilfe von Stickstoff, anstelle der obengenannten Luft-Sauerstoff-Mischung, inert eingestellt. Es folgte die Sinterung bei 1200 °C.
Die erhaltenen Teile waren riß- und verzugsfrei.

### Beispiel 2

3 Gew.-Teile Esterwachs auf Basis Rohmontanwachs (TP: 79-85 °C, SZ: 15-20, VZ: 130-160, Dichte: 1,01-1,03 g/cm³, Viskosität: ca. 30 mPa.s/ 100 °C) wurden mit 7 Gew.-Teilen Polyolefinwachs (TP: 113-118 °C, SZ: 16-19, VZ: 30-45, Dichte: 0,97-0,99 g/cm³, Viskosität: 200 mPa.s/140 °C) und 6 Gew.-Teilen eines Ethylen-Vinylacetat-Copolymers (Schmelzindex: 0,2-0,4 dg/min., VA-Anteil: 11-13 %, Vicat-E.Temp.: 79 °C) bei 150 °C in einem Rührgefäß geschmolzen und zu einer homogenen Schmelze verarbeitet. In diese Schmelze wurden unter Rühren 0,07 Gew.-Teile eines Azo-Esters 2,2-Azo-bis(2-acetoxy-propan) und eines organischen Peroxids (Scorch-Temperatur: ca. 160 °C) gegeben.

In die Schmelze wurden nun 85 Gew.-Teile Aluminiumoxid mit einem mittleren Korndurchmesser von 5 µm eingeknetet. Die Temperatur betrug 150 °C.
Die daraus erhaltene Knetmasse war wenig abbrasiv, was sich im Weißgrad der Masse zeigte.
Die Masse wurde bei 150 °C zu Stäben mit einem Durchmesser von 6 mm und einer Länge von 50 mm verspritzt.
Die kalten Formstäbe zeichneten sich durch eine hohe Festigkeit aus.
Die Stäbe wurden nun auf eine 2-Punktauflage in einen Ofen gelegt. Beide Auflagepunkte waren dabei ca. 40 mm entfernt, sodaß die Formteile im mittleren Abschnitt keine Abstützung hatten.
Die so angeordneten Prüfkörper wurden auf 180 °C erwärmt und bei dieser Temperatur ca. 1 h gehalten.
Die Durchbiegung der Stäbe am tiefsten Punkt betrug < 1 mm.
Anschließend wurden die Stäbe im gleichen Ofen stufenweise bei 230 °C, 280 °C, 330 °C und 380 °C in mit Sauerstoff angereicherter Gasatmosphäre (Konzentration: 50 Vol.-% Luft, 50 Vol.-% Sauerstoff, Ofenkammerdruck: 1,1 bar abs) entwachst.
Die Haltezeiten bei den angegebenen Temperaturen betrugen je 4 h. Die Aufheizraten zwischen den Temperaturplateaus betrugen 2 K/min.
Nach Beendigung des Entwachsungsschritts wurden die Proben bei einer Aufheizrate von 5 K/min auf ca.1400 °C aufgeheizt und gesintert.
Die erhaltenen Teile waren rißfrei.

## Patentansprüche

1. Formmasse auf Basis von anorganischen Sinterwerkstoffen bestehend aus
70 bis 96 Gew.-Teilen eines Keramik- oder Metallpulvers,
1 bis 10 Gew.-Teilen eines halbsynthetischen Wachses mit einem Tropfpunkt von 79 bis 90 °C, einer Säurezahl von 5 bis 35 mg KOH/g, einer Verseifungszahl von 70 bis 160 mg KOH/g, einer Dichte von 0,97 bis 1,03 g/cm³ und einer Viskosität bei 100 °C von 20 bis 80 mPa.s,
2 bis 10 Gew.-Teilen eines Polyolefinwachses mit einem Tropfpunkt von 102 bis 158 °C, einer Säurezahl von 0 bis 64 mg KOH/g, einer Verseifungszahl von 0 bis 115 mg KOH/g, einer Dichte von 0,87 bis 1,03 g/cm³ und einer Viskosität bei 170 °C von 100 bis 1500 mPa.s,
0,98 bis 9,9 Gew.-Teilen eines Ethylen-Vinylacetat-Copolymers mit einem Schmelzindex von 0,2 bis 440 dg/min., einem VA-Anteil von 11 bis 42 % und einer Vicat-Erweichungstemperatur von 36 bis 80 °C,
0 bis 0,05 Gew.-Teilen eines organischen Peroxids mit einer SCORCH-Temperatur von mehr als 100 °C und
0 bis 0,05 Gew.-Teilen eines Azoesters.

2. Verfahren zur Herstellung der Formmasse nach Anspruch 1 durch Schmelzen des halbsynthetischen Wachses und des Polyolefinwachses bei einer Temperatur von 130 bis 160 °C, Lösen des Ethylen-Vinylacetat-Copolymers in der Schmelze, gegebenenfalls nachfolgendes Zufügen des Peroxids und des Azoesters und Einmischen des Keramik- oder Metallpulvers bei einer Temperatur von 130 bis 170 °C.

3. Verwendung der Formmasse nach Anspruch 1 zur Herstellung von keramischen und pulvermetallurgischen Formteilen durch thermoplastische Formgebung.

## Claims

1. A molding composition which is based on inorganic sintering materials and consists of
70 to 96 parts by weight of a ceramic or metal powder,
1 to 10 parts by weight of a semi-synthetic wax having a dropping point of 79 to 90°C, an acid number of 5 to 35 mg of KOH/g, a saponification number of 70 to 160 mg of KOH/g, a density of 0.97 to 1.03 g/cm³ and a viscosity at 100°C of 20 to 80 mPa.s,
2 to 10 parts by weight of a polyolefin wax having a dropping point of 102 to 158°C, an acid number of 0 to 64 mg of KOH/g, a saponification number of 0 to 115 mg of KOH/g, a density of 0.87 to 1.03 g/cm³ and a viscosity at 170°C of 100 to 1500 mPa.s,
0.98 to 9.9 parts by weight of an ethylene/vinyl acetate copolymer having a melt index of 0.2 to 440 dg/min, a VA content of 11 to 42% and a Vicat softening point of 36 to 80°C,
0 to 0.05 part by weight of an organic peroxide having a scorch temperature of greater than 100°C and
0 to 0.05 part by weight of an azo ester.

2. A process for the preparation of a molding composition as claimed in claim 1 by melting the semi-synthetic wax and the polyolefin wax at a temperature of 130 to 160°C, dissolving the ethylene/vinyl acetate copolymer in the melt, subsequently adding the peroxide and the azo ester if appropriate and mixing in the ceramic or metal powder at a temperature of 130 to 170°C.

3. The use of a molding composition as claimed in claim 1 for the production of ceramic and powder-metallurgical moldings by thermoplastic shaping.

## Revendications

1. Masse de moulage à base de matériaux frittés minéraux composés de 70 à 96 parties en poids d'une poudre céramique ou métallique,
de 1 à 10 parties en poids d'une cire semi-synthétique ayant un point de goutte de 79 à 90°C, un indice d'acide de 5 à 35 mg KOH/g, un indice de saponification de 70 à 160 mg KOH/g , une densité de 0,97 1,03 g/cm³ et une viscosité à 100°C de 20 à 80 mPa.s,
de 2 à 10 parties en poids d'une cire polyoléfinique ayant un point de goutte de 102 à 158°C, un indice d'acide de 0 à 64 mg KOH/g, un indice de saponification de 0 à 115 mg KOH/g, une densité de 0,87 à 1,03 g/cm³ et une viscosité à 170°C de 100 à 1500 mPa.s,
de 0,98 à 9,9 parties en poids d'un copolymère de l'éthylène-acétate de vinyle ayant un indice de fusion de 0,2 à 440 dg/min, un taux en acétate de vinyle de 11 à 42% et une température de ramollissement Vicat de 36 à 80°C,
de 0 à 0,05 partie d'un peroxyde organique ayant une température prévulcanisation supérieure à 100°C et
de 0 à 0,05 partie en poids d'un ester azoïque.

2. Procédé pour la préparation de la masse de moulage selon la revendication 1, par fusion de la cire semi-synthétique et de la cire polyoléfinique à une température de 130 à 160°C, par dissolution du copolymère de l'éthyène-acétate de vinyle dans la fonte, éventuellement par addition ultérieure du peroxyde et de l'ester azoïque et par incorporation par mélange de la poudre céramique ou métallique à une température de 130 à 170°C.

3. Utilisation de la masse de moulage selon la revendication 1 pour la préparation de pièces moulées céramique de poudre et de métallurgie des poudres par moulage thermoplastique.
